(19) Europäisches Patentamt
European Patent Office
Office européen des brevets

(11) **EP 2 938 638 B1**

(12) **EUROPEAN PATENT SPECIFICATION**

(45) Date of publication and mention
of the grant of the patent:
**14.11.2018 Bulletin 2018/46**

(51) Int Cl.:
***C08B 37/00*** *(2006.01)*     ***C08J 3/28*** *(2006.01)*

(21) Application number: **13814180.9**

(22) Date of filing: **27.12.2013**

(86) International application number:
**PCT/EP2013/078061**

(87) International publication number:
**WO 2014/102332 (03.07.2014 Gazette 2014/27)**

(54) **DEPOLYMERISATION OF ALGINIC ACID**

DEPOLYMERISATION VON ALGININSÄURE

DÉPOLYMÉRISATION D'ACIDE ALGINIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.12.2012 EP 12199699
28.12.2012 US 201261746853 P**

(43) Date of publication of application:
**04.11.2015 Bulletin 2015/45**

(73) Proprietor: **DuPont Nutrition Biosciences ApS
1411 Copenhagen K (DK)**

(72) Inventors:
• **KLINGER, Markus
3500 Værløse (DK)**
• **AHMED, Toqeer
8220 Brabrand (DK)**
• **JUUL, Anne Grete
8660 Skanderborg (DK)**
• **STENBÆK, Dorthe
8220 Braband (DK)**

(56) References cited:
**KR-A- 20010 100 250     US-A1- 2011 028 708**

EP 2 938 638 B1

**Description**

FIELD OF THE INVENTION

The present invention relates to a method of depolymerization of alginic acid, and the depolymerised alginic acid obtained by the method.

BACKGROUND OF THE INVENTION

Alginate and alginic acid are the generic terms applied to a natural occurring hydrophilic polysaccharide distributed widely in the cell walls of brown algae and certain microorganisms. In extracted form it absorbs water quickly; it is capable of absorbing 200-300 times its own weight in water.

Alginate is used in various pharmaceutical preparations such as gastric, anti-reflux medication. Alginate is further used as an impression-making material in dentistry, prosthetics, lifecasting and occasionally for creating positives for small-scale casting. It is also used in the food industry, as thickener and gelling agent, and as dietary fibre. Moreover, alginate is used in industrial applications such as textile printing, welding rods and paper coating. Calcium alginate is used in different types of medical products, including burn dressings that promote healing and can be removed with less pain than conventional dressings. Also, due to alginate's biocompatibility and simple gelation with divalent cations such as calcium, it is widely used for cell immobilization and encapsulation.

For many of the above usages such as as gastric, anti-reflux medication and dietary fibre, low molecular weight alginates are needed since a low viscosity of the final product is desired, even though alginates are dosed at high concentrations.

Currently, production methods are based on thermal depolymerisation of intermediates, i.e. alginic acid, or of finished products, i.e. sodium alginate. [H.K. Holmea, K. Lindmoa, A. Kristiansena, O. Smidsrød Thermal depolymerization of alginate in the solid state, Carbohydr. Polym. 2003, 54, 431-438].

KR 20010100250 describes a method comprising the steps of suspending powdered brown seaweed and a powdered tangle in water, leaving it at room temperature for 30 min. and thereafter pre-treating the material with a microwave-treatment.

US 2011/0028708 describes a microwave treatment of an alginic acid material in water.

However, a lean, continous, and cost-effective method is still desired.

Moreover, seaweeds commonly used for alginate production can under certain storage conditions or due to seasonality occasionally lead to high microbiological count in the final alginate product.

OBJECT OF THE INVENTION

It is an object of embodiments of the invention to provide a lean and cost-effective method that minimizes mechanical or manual handling. It is a further object of embodiments of the invention to provide a method for depolymerisation of alginic acid with a low usage of chemicals for enviromental reasons. It is furthermore an object of embodiments of the invention to provide a method which reduces the microbial count in the final alginate product. It is furthermore an object of embodiments of the invention to provide a method which also result in a sterilized depolymerised alginate product.

SUMMARY OF THE INVENTION

It has been found by the present inventor(s) that using the herein disclosed microwave treatment an effective and fast method for depolymerisation of alginic acid is obtained. In one experiment, the weight average molecular weight of alginic acid is reduced to 43 kDa from 270 KDa after 7 min and 40 sec of microwave treatment. In comparison, treatment in a traditional oven at 105 °C for 2 hours results in a slightly higher weight average molecular weight, *i.e.* 56 kDa.

Further, no additional processing such as addition of chemicals or storage of intermediates is required for the microwave treatment. Instead, it offers the possibility of setting up a continuous process.

Furthermore microwave treatment is an effective method for killing the microorganisms if any in the alginic acid starting material. Results from lab experiments show that 5 minutes of microwave treatment of a sample was sufficient to reduce the total plate count from $10^4$ to <100 colony forming units (cfu)/g, and for mesophilic spores from $10^4$ to <10 cfu/g. Pilot scale results showed that less than 3 minutes of microwave treatment of a sample was sufficient to reduce the total plate count from $10^4$ cfu/g to <100 cfu/g.

So, in a first aspect the present invention relates to method of depolymerisation of alginic acid, said method comprising the steps of:

a) providing alginic acid as an alginic acid starting material for step b, wherein the alginic acid starting material has a pH in the range of 0-4.4 and wherein the dry matter content of the alginic acid starting material is in the range of 5-100% w/w, and

b) treating said alginic acid starting material with microwave irradiation to obtain a depolymerised alginic acid material.

In a further aspect, the invention relates to a depolymerised alginic acid material obtainable by the method as described herein.

DETAILED DISCLOSURE OF THE INVENTION

Disclosed herein is a method of depolymerisation of alginic acid, said method comprising the steps of:

a) providing alginic acid as an alginic acid starting material for step b, wherein the alginic acid starting material has a pH in the range of 0-4.4 and wherein the dry matter content of the alginic acid starting material is in the range of 5-100% w/w, and

b) treating said alginic acid starting material with microwave irradiation to obtain a depolymerised alginic acid material.

Alginate and alginic acids are the linear co-polymers comprised of 1-4 linked $\beta$-D-mannuronic and a-L-guluronic acid as the monomeric building blocks (salts; mannuronate and guluronate). The monomers can appear in homopolymeric blocks of consecutive G-residues (G-blocks), consecutive M-residues (M-blocks) or alternating M and G-residues (MG-blocks).

The pKa values of mannuronic and guluronic acid are 3.38 and 3.65 respectively, which limits the solubility of polymannuronic and polyguluronic acid in water at low pH. Alginates with alternating mannuronic and guluronic acid residues (MG) have the highest acid solubility.

In nature alginate is mainly limited to the marine brown algae, *Phaeophyta,* although extracellular polymeric material resembling alginate from brown algae are also produced by soil bacteria such as *Azotobacter vinelandii* and several species of *Pseudomonas.* Alginate exist in the brown algae, as the most abundant polysaccharide comprising up to 40% of the dry matter, and 2-7% of the weight of the wet seaweed. It is located in the intercellular matrix as a gel containing sodium, calcium, magnesium and other multivalent cations. Its main function is structural giving both strength and flexibility to the algal tissue.

The starting material for the present method is preferably based on natural alginate from seaweed. However, it may also be based on alginate arising from *Azotobacter vinelandii* and other microroganims.

Traditionally alginate processing consists of several steps. The first step after harvesting, and optionally drying of the seaweed, may be milling and washing. Thereafter the alkaline extraction process starts, and after a number of different processing steps pure alginic acid is produced. The alginic acid serves as the raw material for the different alginate salts and ester.

One way to isolate alginate from the biomass is to lower the pH below the pKa of the acid residues. With decreasing pH, calcium and other cations bound by the caboxylic acids become exchanged with protons and the polymer will precipitate as alginic acid coagulate of a gelled or solid stage. The content of cations and calcium has been considerably reduced in the solid/gelled material during this step of purification. The isolated gelled/solid material may be dissolved by increasing pH with alkali to form e.g. sodium alginate, which can then be subjected to further purification steps e.g. filtration. The final isolation step may be carried out in different ways. One of these is the precipitation of the polymer as Ca-alginate followed by an acid wash to convert the water-insoluble Ca-alginate to alginic acid. Another way is to precipitate the liquid sodium alginate directly as alginic acid by addition of e.g. sulphuric acid. In both cases, the resultant alginic acid may be used as the starting material for preparation of the different alginate salts, and also for the covalently modified propylene glycol ester. After the alginic acid has been neutralized, the alginate salt is dried and milled to the desired particle size. Yet another way to isolate the final alginate is to precipitate liquid sodium alginate in alcohol e.g. ethanol or isopropyl alcohol whereby a gelled/solid stade of e.g. sodium alginate is obtained. Salts of sodium, potassium, and ammonium alginate are soluble in water and form viscous solutions. Alginic acid and calcium alginate are insoluble in water.

*Description of the alginic acid starting material*

The starting material used in the herein disclosed method comprises alginic acid.

In the present context, the term "alginic acid" means that the constituting mannuronic and guluronic acid are fully protonated down to the limit where the degree of protonation is 50 %, i.e. their pKa-values. Alginate pKa-values have been measured to be up to 4.4 [A. Haug, Dissociation of alginic acid, Acta Chem. Scand. 1961, 15, 950-952].

As described above the alginic acid may be obtained by lowering the pH below the pKa of the acid residues. This enables the removal of, among other cations, calcium, magnesium, iron, potassium and sodium from the polymer.

In one aspect, the alginic acid is in the form of an alginic acid coagulate of a gelled or solid stage. In a further aspect, the alginic acid is insoluble. The insolubility of the alginic acid may be measured by any method known to the person skilled in the art for example as described in "A. Haug, B. Larsen The solubility of alginate at low pH, Acta Chem. Scand. 1963, 17, 1653-1662".

In one aspect, the alginic acid starting material is in the form of alginic acid fibers.

The alginic acid starting material in the present method should contain enough moisture to prevent browning or burning of the material during microwave treatment.

In one aspect, the dry matter content of the alginic acid starting material is in the range of 5-100% w/w, such as in the range of 5-90% w/w, such as in the range of 15-70% w/w, preferably in the range of 25-45% w/w.

The dry matter content may be adjusted by addition of one or more solvents. In one aspect, the alginic acid starting material comprises alginic acid in a mixture with one or more selected solvents from the group consisting of water, methanol, ethanol, and isopropanol. In a preferred aspect, the alginic acid is mixed with water as the only solvent. In a preferred aspect, the alginic acid starting material comprises alginic acid in water.

The concentration of alginic acid in the alginic acid starting material is preferably in the range of 7.5-100% w/w based on dry matter, such as in the range of 80-100% w/w based on dry matter, preferably in the range of 90-100% w/w based on dry matter. Alginate concentrations can be measured in various ways known to the person skilled in the art, see for example "H.S. Soedjak Colorimetric determination of carrageenans and other anionic hydrocolloids with Methylene Blue, Anal. Chem. 1994, 66, 4514-4518" and references mentioned herein.

In one aspect, the starting alginic acid material has a weight average molecular weight of 1,500,000 - 50,000 Da. The molecular weight may be measured by the method described herein under "General Procedures".

In one aspect, the alginic acid starting material has a pH in the range of 0-4.4, such as in the range of 0-3.65, such as in the range of 0-3.5, such as in the range of 0.1-4.2, such as in the range of 0.2-3.65, such as preferably in the range of 0-2.5. In one aspect, the pH is adjusted by addition of acids such as sulphuric acid. By carrying out the microwave treatment of the alginic acid in the pH range of pH 0- 4.4 it has been found that a faster cleavage of the glycosidic linkages is obtained, which results in a faster depolymerisation process meaning less energy consumption.

In order to facilitate depolymerization, a suitable agent may be added, *i.e.* reducing or oxidizing agents. [O. Smidsrød, A. Haug, B. Larsen Degradation of Alginate in the Presence of Reducing Compounds, Acta Chem. Scand. 1963, 17, 2628-2637], [O. Smidsrød, A. Haug, B. Larsen The Influence of Reducing Substances on the Rate of Degradation of Alginates, Acta Chem. Scand. 1963, 17, 1473-1474], [O. Smidsrød, A. Haug, B. Larsen Kinetic Studies on the Degradation of Alginic Acid in the Presence of Iron Salts, Acta Chem. Scand. 1965, 19, 143-152]. Thus, in one aspect, the alginic acid starting material may further comprise a reducing and/or oxidizing agent such as selected from the group of hydroquinone, sodium sulfite, phloroglucinol, sodium hydrogen sulfide, dithionite, cystein, thioglycolic acid, phenylhydrazine, ascorbic acid, reduced diphosphopyridine nucleotide (DPNH) in combination with methylene blue, hydrazine sulfate, dihydroxymaleic acid, hydrogen peroxide with or without the addition of iron(III) chloride.

*Microwave treatment*

In the present context, the term "depolymerised alginic acid material" means that the resulting alginic acid material which has been treated has a lower weight average molecular weight than the alginic acid starting material measured for example as decribed herein.

Preferably the microwave treatment is performed as a continuous process.

In one aspect, the alginic acid starting material may be drained and/or pressed and/or dried before the microwave treatment.

In one aspect, the microwave frequency is between 300 MHz and 300 GHz, preferably 300 MHz to 30 GHz, preferably 300 MHz to 3 GHz. Depending on the desired final viscosity of the depolymerised alginic acid material for the final application, the time or effect of microwave treatment may be adjusted.

In one aspect, the microwave treatment is performed at atmospheric pressure.

In one aspect, the depolymerised alginic acid material has a weight average molecular weight of 300,000-2,000 Da.

In one aspect, the method as described herein provides a depolymerized alginic acid without by-products or a small percentage of by-products, and the depolymerised alginic acid is thus obtained in a high purity.

*Optional treatments after the microwave treatment*

After the microwave treatment, the depolymerised alginic acid material depending on the further usage may dried and/or milled and/or blended and/or bagged.

In one aspect, the depolymerised alginic acid material is further neutralised after the microwave treatment to obtain various alginates. The neutralisation may be performed by a number of methods known to the skilled person. In one aspect, the neutralisation is performed with one or more selected salts from the group of $(NH_4)_2CO_3$, $Mg(HCO_3)_2$, $Ca(HCO_3)_2$, $Na_2CO_3$, $NaHCO_3$, $K_2CO_3$, $KHCO_3$, $NH_4HCO_3$, $MgCO_2$, $CaCO_3$, $CaSO_4$ and $Na_2SO_4$, such as from the group of $Na_2CO_3$, $NaHCO_3$, $K_2CO_3$, $KHCO_3$, $NH_4HCO_3$, $MgCO_2$, and $CaCO_3$ to obtain a neutralised, depolymerised alginate.

In yet a further aspect, the depolymerised alginic acid is converted into propylene glycol alginate using propylene oxide as reagent.

In yet a further aspect, the neutralised, depolymerised alginic acid material is further dried and/or milled and/or blended and/or bagged.

In yet a further aspect, the neutralised, depolymerised alginic acid material is blended with other salts, such as phosphates, citrates, carbonates and calcium salts, for food or pharma applications.

In the following further embodiments are described:

Embodiment 1. A method of depolymerisation of alginic acid, said method comprising the steps of:

a) providing alginic acid as a starting material for step b, and

b) treating said alginic acid starting material with microwave irradiation to obtain a depolymerised alginic acid material.

Embodiment 2. A method of depolymerisation of alginic acid, said method comprising the steps of:

a) providing alginic acid as a starting material for step b, wherein the alginic acid starting material has a pH in the range of 0-4.4 and wherein the dry matter content of the alginic acid starting material is in the range of 5-100% w/w, and

b) treating said alginic acid starting material with microwave irradiation to obtain a depolymerised alginic acid material.

Embodiment 3. The method according to any one of embodiments 1-2, wherein the alginic acid is in an insoluble form.

Embodiment 4. The method according to any one of embodiments 1-3, wherein the microwave frequency is between 300 MHz and 300 GHz, such as 300 MHz to 30 GHz, preferably 300 MHz to 3 GHz.

Embodiment 5. The method according to any one of the preceeding embodiments, wherein the concentration of alginic acid in the alginic acid starting material is in the range of 7.5-100% w/w based on dry matter, such as in the range of 80-100% w/w based on dry matter, preferably in the range of 90-100% w/w based on dry matter.

Embodiment 6. The method according to any one of the preceding embodiments, wherein the alginic acid starting material has a pH in the range of 0-4.4, such as in the range of 0-3.5, such as in the range of 0.1-4.2, such as in the range of 0.2-3.65, such as preferably in the range of 0-2.5.

Embodiment 7. The method according to any one of the preceding embodiments, wherein the dry matter content of the alginic acid starting material is in the range of 5-100% w/w, such as in the range of 5-90% w/w, such as in the range of 15-70% w/w, preferably in the range of 25-45% w/w.

Embodiment 8. The method according to any one of the preceding embodiments, wherein the starting alginic acid material has a weight average molecular weight of 1,500,000 - 50,000 Da.

Embodiment 9. The method according to any one of the preceding embodiments, wherein the alginic acid starting material comprises alginic acid in a mixture with one or more selected solvents from the group consisting of water, methanol, ethanol, and isopropanol.

Embodiment 10. The method according to any one of the preceding embodiments, wherein the alginic acid starting material comprises alginic acid in water.

Embodiment 11. The method according to any one of the preceding embodiments, wherein the alginic acid starting material further comprises a reducing and/or oxidizing agent such as selected from the group of hydroquinone, sodium sulfite, phloroglucinol, sodium hydrogen sulfide, dithionite, cystein, thioglycolic acid, phenylhydrazine, ascorbic acid, reduced diphosphopyridine nucleotide (DPNH) in combination with methylene blue, hydrazine sulfate, dihydroxymaleic acid, hydrogen peroxide with or without the addition of iron(III) chloride.

Embodiment 12. The method according to any one of the preceding embodiments, wherein the depolymerised alginic acid material has a Total Plate Count below 5000 cfu/g, preferably below 1000 cfu/g.

Embodiment 13. The method according to any one of the preceding embodiments, wherein the alginic acid starting material is drained and/or pressed and/or dried before the microwave treatment.

Embodiment 14. The method to any one of the preceding embodiments, wherein the depolymerised alginic acid material has a weight average molecular weight of 300,000-2,000 Da.

Embodiment 15. The method according to any one of the preceding embodiments, wherein the depolymerised alginic acid material is further dried and/or milled and/or blended and/or bagged.

Embodiment 16. The method according to any one of the preceding embodiments, wherein the depolymerised alginic acid material is further neutralised after the microwave treatment to obtain various alginates.

Embodiment 17. The method according to any one of the preceding embodiments, wherein the neutralisation is performed with one or more selected salts from the group of $(NH_4)_2CO_3$, $Mg(HCO_3)_2$, $Ca(HCO_3)_2$, $Na_2CO_3$, $NaHCO_3$, $K_2CO_3$, $KHCO_3$, $NH_4HCO_3$, $MgCO_2$, $CaCO_3$, $CaSO_4$ and $Na2SO_4$, such from the group of $Na_2CO_3$, $NaHCO_3$, $K_2CO_3$, $KHCO_3$, $NH_4HCO_3$, $MgCO_2$, and $CaCO_3$ to obtain a neutralised, depolymerised alginate.

Embodiment 18. The method according to any one of the preceding embodiments, wherein the depolymerised alginic acid is converted into propylene glycol alginate using propylene oxide.

Embodiment 19. The method according to any one of the preceding embodiments, wherein the neutralised, depolymerised alginic acid material is further dried and/or milled and/or blended and/or bagged.

Embodiment 20. The method according to any one of the preceding embodiments, wherein the neutralised, depolymerised alginic acid material is blended with other salts, such as phosphates, citrates, carbonates and calcium salts, for food or pharma applications.

Embodiment 21. The method according to any one of the preceding embodiments, wherein the alginic acid starting material is in the form of alginic acid fibers.

Embodiment 22. A depolymerised alginic acid material obtainable by the method according to any one of embodiments 1-21.

## GENERAL PROCEDURES

### Measurement of viscosity

The viscosity of alginic acid is measured by suspending alginic acid in water in a concentric cylinder (cup and bob) using the measuring system CC 27/T200/SS. After adding a few drops of universal indicator the suspension turns dark pink. Sodium carbonate is added slowly until the color turns greenish yellow. As this point the alginic acid is fully dissolved. The viscosity is then measured using a rheometer (Anton Paar, Physica MCR301) at 20 °C with a shear rate of 0.33 $s^{-1}$.

### M:G ratio

The M/G ratio of an alginate sample is determined as desribed in the literature (H. Grasdalen, B. Larsen, O. Smidsrød A Proton Magnetic Resonance Study of the Sequence of Uronate Residues in Alginate Carbohydr. Res. 1979, 68, 23-31) using a Bruker Avance III 600MHz spectrometer with a 5mm broad band observe probe.

**Measurement of weight average molecular weight**

The weight average molecular weight of alginate may be determined by dissolving the alginate in a running buffer and analysing by Gel Permeation Chromatography equipped with a Multi Angle Light Scattering detector (DAWN EOS, Wyatt Technology Corporation), an RI detector (Optilab rEX, Wyatt Technology Corporation)and GPC columns such as PSS SUPREMA-LUX 1000 Å and PSS SUPREMA-LUX 3000 Å.

A buffer of 0.05 M $LiNO_3$ with 200 ppm $N_3^-$ is prepared by dissolving 17.23g $LiNO_3$ p.a. and 1.56 g $NaN_3$ in 5.00 L Millipore Water. The eluent is filtered through a 0.22 $\mu$m filter.

1-2 mg/ml samples are dissolved in running buffer under stirring and samples are filtered through a 0.45 $\mu$m filter (13 mm GHP 0.45 $\mu$m Minispike from Waters). Normal running conditions are: Flow= 0.8 mL/min, injection volume=100$\mu$L, column temperature= 40°C, detector temperature= 30 °C.

**Dry matter content**

The dry matter content of alginate may be determined by weighing the dry residue after evaporation of the water contained in a sample heated at 105°C.

A glass container is dried for 1 hour in an oven at 105°C and then cooled for 1 hour in a desiccator before using it. Thereafter 2 ±0.001g of alginate is placed in the container and the open glass container is placed in an oven at 105°C for 4 hours. The dry residue is weighed after cooling in a desiccator for 20 minutes.

The dry matter content is calculated as follows:

$$\% \text{ Dry matter} = \frac{P3-P1}{M} \times 100$$

$$\% \text{ moisture content} = 100 - \text{dry matter}$$

P1 = Tare of the glass container, in g

P2 = Tare of the glass container + sodium alginate, in g

P3 = Tare + dry residue, in g

M = P2-P1, Sodium alginate weight, in g

**Microbiological analysis**

Samples of AA before and after microwave treatment were analysed according to 3M Petrifilm Aerobic Count Plates, Interpretation Guide, Reminders for Use and Sample Preparation.

Nordval Certificate No. 012. NMKL Method 146.1993 (Ref. 3) for total aerobic microbial count.

Mesophillic aerobic sporulates were analysed according to American Public Health Association for Food and Drug (APHA), 2001, 4th version, 22.512.

**EXPERIMENTALS**

**EXAMPLE 1**

Taken from an industrially produced alginic acid fiber starting material (Dry matter: 32 %, pH: 1.7) 160g alginic acid were placed in a 800 ml glass beaker and microwave treated with 800 watt effect (Electolux) for 7 minutes and 40 seconds.

Alternatively, 130 g alginic acid were placed in an oven at 40 °C for 66 hours, either with or without the addition of 582 $\mu$L 35 % (w/v) $H_2O_2$ solution.

Alternatively, 150 g alginic acid were placed in an oven at 105 °C for 2 hours.

In a different series of trials, 200 g of alginic acid were blended with 17.6 g $Na_2CO_3$ in a food processor (KRUPS). The sample was dried at 40°C for 16 hours in an oven. Hereafter the samples were milled (Retsch ZM 200) and sieved through a 200 $\mu$m sieve.

From this sodium alginate, 13 g were placed in an oven at 105 °C for 7 h and 30 minutes. In a final experiment 110 $\mu$L 35 % (w/v) $H_2O_2$ solution were added to 8.75 g sodium alginate. This mixture was placed in an oven at 105 °C for 7 h and 30 minutes.

Weight average molecular weights were determined by Gel Permeation Chromatography equipped with a Multi Angle Light Scattering detector and a RI detector (Wyatt Technology Corporation). 1-2 mg/ml sample were dissolved in a buffer consisting of Millipore water with 0.05 M LiNO$_3$ with 200ppm NaN3. Prior to measurement the solution was filtered through a 0.45 μm filter.

Normal running conditions were: Flow= 0.8 mL/min, Injection volume=100μL, column temperature= 40°C, detector temperature= 30 °C, dn/dc (mL/g) 0.154. Calculations were done using Astra 5 software from Wyatt Technology Corporation.

Table 1. Molecular weights of alginates treated under different conditions.

| Sample and treatment | Mw / kD |
|---|---|
| Sodium alginate, not treated | 270 |
| Alginic acid, microwave treated 7 min 40 s | 43 |
| Alginic acid oven treated 40 °C 66 h | 47 |
| Alginic acid oven treated 40 °C, with H$_2$O$_2$ added, 66 h | 42 |
| Alginic acid, oven treated 105 °C, 2 h | 56 |
| Sodium alginate, oven treated 105 °C, 7 h 30 min | 140 |
| Sodium alginate, oven treated 105 °C, with H$_2$O$_2$ added, 7 h 30 min | 130 |

## EXAMPLE 2

Depolymerisation induced by microwave treatment at 850 W (Electrolux), was carried out on two different alginic acid starting materials with characteristics as described in below Table 2.

TABLE 2: Alginic acid starting materials selected for microwave induced depolymerisation.

| Alginic Acid | Type | pH | Dry matter content (%) | 1% viscosity (mPa·s) |
|---|---|---|---|---|
| Starting material 1 | High M | 2.0 | 25.0 | 660 |
| Starting material 2 | High G | 2.0 | 24.5 | 470 |

The initial 1% sodium alginate viscosities were measured.

TABLE 3: Microwave treatments of alginic acid, high M and high G. Development of the dry matter content was recorded for the high M alginic acid.

| Time (min.) | Dry matter content (%) | 10% Viscosity (mPa·s) | |
|---|---|---|---|
| | | High M | High G |
| 0 | 25 | $1 * 10^7$ | $5 * 10^6$ |
| 5.0 | 47 | 9310 | |
| 7.5 | | | 3300 |
| 9.5 | | | 1700 |
| 10.0 | 76.8 | 932 | |
| 10.167 | | | 1350 |
| 11.333 | | | 1225 |
| 12.0 | 86.2 | 460 | |
| 15.0 | material burns, *i.e.* turns dark/black | | |

The duration of the microwave oven treatment was limited since moisture evaporated from the alginic acid.

The required treatment seemed to be just short enough, however, to avoid complete dry out and burning of the product. Reducing 1% viscosities of 500-1500 mPa·s to 2000 mPa·s 10% viscosity would require 10-13 minutes of microwave treatment at 850-900 Watt. For calculation of the required depolymerisation time half times were applied. A prerequisite is to measure the 1% sodium alginate viscosity of the starting alginic acid material and convert it to the 10% sodium alginate viscosity. The half-time for the alginic acid was 52 seconds.

## EXAMPLE 3

### Laboratory experiments

A sample of AA based on *Laminaria hyperborea* a pH of 2.0 and a dry matter content of 24.5% w/w were used in the following. Cultures of *Bacillus subtilis* and *Bacillus licheniformis* were produced in the DuPont Food Protection laboratories in Brabrand, Denmark.

From the AA material 3 samples of 150 g were transferred to plastic jugs. 10 ml of *Bacillus subtilis* and *Bacillus licheniformis* culture, respectively, were each added to a jug and mixed well by using a spoon for 30 sec. Two of the three samples were treated in a microwave oven, type Electrolux 850W as shown in below table 4.

### Treatment in microwave

Table 4: Overview of experiment (treatment time in microwave.

| Sample ID | Effect (W) | Treatment time in microwave (min) |
|---|---|---|
| Jug-1 | No treatment in microwave | No treatment in microwave |
| Jug-2 | 850 | 5 |
| Jug-3 | 850 | 10 |

### Pilot plant tests

In addition to the lab bench tests a challenged test was carried out on pilot scale. A batch of microbially contaminated AA was processed in a microwave pipe, type "Thermo-star" from Bertin Technology. Total plate count analysis revealed that the batch contained a level of $3.10^4$ cfu/g wet AA. The objective of the test was to determine the effect of temperature and time on the microbiological quality of the AA.

### Microwave treatment on pilot scale

Table 5: Treatment of the microbiologically contaminated AA in the pilot microwave pipe.

| Test | Power (W per magnetron) | Screw speed (feed/ transport-rpm) | Flow (kg/h) | Density | Holding time (min) |
|---|---|---|---|---|---|
| 1 | 2000/2000/129/71/71/70 | 11.5/9.8 | 26.9 | 0.21 | 04:30 |
| 2 | 0/401/1607/1603/71/70 | 11.5/9.8 | 23 | 0.21 | 04:13 |
| 3 | 0/0/502/1602/1605/70 | 11.5/9.8 | 24 | 0.21 | 03:25 |
| 4 | 0/0/0/500/1602/1605 | 11.5/9.8 | 24 | | 02:48 |
| 5 | 0/0/0/1250/1602/1605 | 15.1/12.7 | 36 | 0.21 | 01:52 |
| 7 | 1500/2000/1600/1600/1602/1605 | 25/23 | 55 | 0.24 | 01:13 |

### Microbiological analysis

Samples of AA before and after microwave treatment were analysed according to 3M Petrifilm Aerobic Count Plates, Interpretation Guide, Reminders for Use and Sample Preparation.

Nordval Certificate No. 012. NMKL Method 146.1993 for total aerobic microbial count.

Mesophillic aerobic sporulates were analysed according to American Public Health Association for Food and Drug (APHA), 2001, 4th version, 22.512.

## RESULTS

### Laboratory experiments

Total plate count

The results presented in Table 6 show the effect of microwave treatment on the total plate count. The results for Jug-1 (reference) indicate high levels above $6 \cdot 10^4$ cfu/g $12 \cdot 10^4$ cfu/g for portions 1 and 2. After 5 minutes of microwave treatment at 850 W, the plate count in both portions had decreased to <100 cfu/g, i.e. a decrease of two orders of magnitude. After 10 minutes of microwave treatment no further decrease was observed, suggesting that 5 minutes of microwave treatment is sufficient.

Table 6: Total plate count results with and without microwave treatment.

| Sample ID | Treatment time in microwave (min) | Portion 1 (cfu/g) | Portion 2 (cfu/g) |
|---|---|---|---|
| Jug-1 | No treatment in microwave | 63,600 | 123,600 |
| Jug-2 | 5 | < 100 | < 100 |
| Jug-3 | 10 | < 100 | - |

Mesophilic spores

Table 7 presents the corresponding results for the mesophilic spores specifically. Trends similar to those of Table 6 are seen, *i.e.* after 5 minutes of microwave treatment the mesophilic spores had decreased by some two to three orders of magnitude to <10 cfu/g. Again no further benefit was recorded for 10 minutes of microwave treatment.

Table 7: Mesophilic spore count results with and without microwave treatment.

| Sample ID | Treatment time in microwave (min) | Portion 1 (cfu/g) | Portion 2 (cfu/g) |
|---|---|---|---|
| Jug-1 | No treatment in microwave | 44,900 | 157,300 |
| Jug-2 | 5 | < 10 | < 10 |
| Jug-3 | 10 | < 10 | - |

### Pilot scale tests

Total plate count

Table 8: Total plate count results before and after microwave treatment.

| Test | Power (w per magnetron) | Flow (kg/h) | Holding time (min) | TPC before (cfu/g) | TPC after (cfu/g) |
|---|---|---|---|---|---|
| 1 | 2000/2000/129/71/71/70 | 26.9 | 04:30 | >30000 | 1600 |
| 2 | 0/401/1607/1603/71/70 | 23 | 04:13 | >30000 | 100 |
| 3 | 0/0/502/1602/1605/70 | 24 | 03:25 | >30000 | 100 |
| 4 | 0/0/0/500/1602/1605 | 24 | 02:48 | >30000 | 100 |
| 5 | 0/0/0/1250/1602/1605 | 36 | 01:52 | >30000 | 400 |
| 7 | 1500/2000/1600/1600/1602/1605 | 55 | 01:13 | 2400 | <100 |

The results presented in Table 8 show the effect of microwave treatment on the total plate count on pilot scale.

The total plate count was reduced from $10^4$ cfu/g to $< 10^2$ cfu/g. The specification on microbiological quality of alginate specifies <1,000 cfu/g, hence the microbiologically contaminated batch can be microwave treated to comply with specifications.

**Claims**

1. A method of depolymerisation of alginic acid, said method comprising the steps of:

   a) providing alginic acid as a starting material for step b), wherein the alginic acid starting material has a pH in the range of 0-4.4 and wherein the dry matter content of the alginic acid starting material is in the range of 15-70% w/w, and
   b) treating said alginic acid starting material with microwave irradiation to obtain a depolymerised alginic acid material.

2. The method according to claim 1, wherein the microwave frequency is between 300 MHz and 300 GHz, such as 300 MHz to 30 GHz, preferably 300 MHz to 3 GHz.

3. The method according to any one of the preceding claims, wherein the concentration of alginic acid in the alginic acid starting material is in the range of 7.5-100% w/w based on dry matter, such as in the range of 80-100% w/w based on dry matter, preferably in the range of 90-100% w/w based on dry matter.

4. The method according to any one of the preceding claims, wherein the alginic acid starting material has a pH in the range of 0-3.5.

5. The method according to any one of the preceding claims, wherein the starting alginic acid material has a weight average molecular weight of 1,500,000 - 50,000 Da.

6. The method according to any one of the preceding claims, wherein the alginic acid starting material comprises alginic acid in a mixture with one or more selected solvents from the group consisting of water, methanol, ethanol, and isopropanol.

7. The method according to any one of the preceding claims, wherein the alginic acid starting material comprises alginic acid in water.

8. The method according to any one of the preceding claims, wherein the alginic acid starting material further comprises a reducing and/or oxidizing agent.

9. The method according to any one of the preceding claims, wherein the alginic acid starting material is drained and/or pressed and/or dried before the microwave treatment.

10. The method to any one of the preceding claims, wherein the depolymerised alginic acid material has a weight average molecular weight of 300,000-2,000 Da.

11. The method according to any one of the preceding claims, wherein the depolymerised alginic acid material is further neutralised after the microwave treatment to obtain various alginates.

12. The method according to any one of the preceding claims, wherein the depolymerised alginic acid is converted into propylene glycol alginate using propylene oxide.

13. The method according to any one of the preceding claims, wherein the alginic acid starting material is in the form of alginic acid fibers.

**Patentansprüche**

1. Verfahren zur Depolymerisation von Alginsäure, wobei das Verfahren die Schritte umfasst:

a) Bereitstellen von Alginsäure als Ausgangsmaterial für Schritt b), wobei das Alginsäure-Ausgangsmaterial einen pH-Wert in dem Bereich von 0-4,4 aufweist und wobei der Trockenmaterialgehalt des Alginsäure-Ausgangsmaterials in dem Bereich von 15-70 % Gew./Gew. liegt und

b) Behandeln des Alginsäure-Ausgangsmaterials mit Mikrowellenbestrahlung, um ein depolymerisiertes Alginsäurematerial zu erhalten.

2. Verfahren gemäß Anspruch 1, wobei die Mikrowellenfrequenz zwischen 300 MHz und 300 GHz beträgt, wie z. B. 300 MHz bis 30 GHz, vorzugsweise 300 MHz bis 3 GHz.

3. Verfahren gemäß einem der vorstehenden Ansprüche, wobei die Konzentration von Alginsäure in dem Alginsäure-Ausgangsmaterial in dem Bereich von 7,5-100 % Gew./Gew. bezogen auf die Trockenmaterial liegt, wie z. B. in dem Bereich von 80-100 % Gew./Gew. bezogen auf die Trockenmaterial, vorzugsweise in dem Bereich von 90-100 % Gew./Gew. bezogen auf die Trockenmaterial.

4. Verfahren gemäß einem der vorstehenden Ansprüche, wobei das Alginsäure-Ausgangsmaterial einen pH-Wert in dem Bereich von 0-3,5 aufweist.

5. Verfahren gemäß einem der vorstehenden Ansprüche, wobei das Alginsäure-Ausgangsmaterial ein gewichtsgemitteltes Molekulargewicht von 1.500.000-50.000 Da aufweist.

6. Verfahren gemäß einem der vorstehenden Ansprüche, wobei das Alginsäure-Ausgangsmaterial Alginsäure in einem Gemisch mit einem oder mehreren ausgewählten Lösungsmitteln aus der Gruppe bestehend aus Wasser, Methanol, Ethanol und Isopropanol umfasst.

7. Verfahren gemäß einem der vorstehenden Ansprüche, wobei das Alginsäure-Ausgangsmaterial Alginsäure in Wasser umfasst.

8. Verfahren gemäß einem der vorstehenden Ansprüche, wobei das Alginsäure-Ausgangsmaterial ferner ein Reduktions- und/oder Oxidationsmittel umfasst.

9. Verfahren gemäß einem der vorstehenden Ansprüche, wobei das Alginsäure-Ausgangsmaterial vor der Mikrowellenbehandlung drainiert und/oder gepresst und/oder getrocknet wird.

10. Verfahren gemäß einem der vorstehenden Ansprüche, wobei das depolymerisierte Alginsäurematerial ein gewichtsgemitteltes Molekulargewicht von 300.000-2.000 Da aufweist.

11. Verfahren gemäß einem der vorstehenden Ansprüche, wobei das depolymerisierte Alginsäurematerial ferner nach der Mikrowellenbehandlung neutralisiert wird, um verschiedene Alginate zu erhalten.

12. Verfahren gemäß einem der vorstehenden Ansprüche, wobei die depolymerisierte Alginsäure unter Verwendung von Propylenoxid in Propylenglycolalginat umgewandelt wird.

13. Verfahren gemäß einem der vorstehenden Ansprüche, wobei das Alginsäure-Ausgangsmaterial in der Form von Alginsäurefasern vorliegt.

**Revendications**

1. Procédé de dépolymérisation d'acide alginique, ledit procédé comprenant les étapes de :

   a) fourniture d'acide alginique en tant que matériau de départ pour l'étape b),
   dans lequel le matériau de départ d'acide alginique a un pH dans la plage de 0 à 4,4 et dans lequel la teneur en matière sèche du matériau de départ d'acide alginique est dans la plage de 15 à 70 % m/m, et
   b) traitement dudit matériau de départ d'acide alginique avec une irradiation de micro-ondes pour obtenir un matériau d'acide alginique dépolymérisé.

2. Procédé selon la revendication 1, dans lequel la fréquence de micro-ondes est comprise entre 300 MHz et 300 GHz, telle que 300 MHz à 30 GHz, de préférence 300 MHz à 3 GHz.

**3.** Procédé selon l'une quelconque des revendications précédentes, dans lequel la concentration d'acide alginique dans le matériau de départ d'acide alginique est dans la plage de 7,5 à 100 % m/m sur la base de la matière sèche, par exemple dans la plage de 80 à 100 % m/m sur la base de la matière sèche, de préférence dans la plage de 90 à 100 % m/m sur la base de la matière sèche.

**4.** Procédé selon l'une quelconque des revendications précédentes, dans lequel le matériau de départ d'acide alginique a un pH dans la plage de 0 à 3,5.

**5.** Procédé selon l'une quelconque des revendications précédentes, dans lequel le matériau d'acide alginique de départ a un poids moléculaire moyen en poids de 1 500 000 à 50 000 Da.

**6.** Procédé selon l'une quelconque des revendications précédentes, dans lequel le matériau de départ d'acide alginique comprend de l'acide alginique dans un mélange avec un ou plusieurs solvants choisis dans le groupe constitué de l'eau, du méthanol, de l'éthanol et de l'isopropanol.

**7.** Procédé selon l'une quelconque des revendications précédentes, dans lequel le matériau de départ d'acide alginique comprend de l'acide alginique dans de l'eau.

**8.** Procédé selon l'une quelconque des revendications précédentes, dans lequel le matériau de départ d'acide alginique comprend en outre un agent réducteur et/ou oxydant.

**9.** Procédé selon l'une quelconque des revendications précédentes, dans lequel le matériau de départ d'acide alginique est drainé et/ou pressé et/ou séché avant le traitement par micro-ondes.

**10.** Procédé de l'une quelconque des revendications précédentes, dans lequel le matériau d'acide alginique dépolymérisé a un poids moléculaire moyen en poids de 300 000 à 2 000 Da.

**11.** Procédé selon l'une quelconque des revendications précédentes, dans lequel le matériau d'acide alginique dépolymérisé est en outre neutralisé après le traitement par micro-ondes pour obtenir différents alginates.

**12.** Procédé selon l'une quelconque des revendications précédentes, dans lequel l'acide alginique dépolymérisé est converti en alginate de propylène glycol en utilisant de l'oxyde de propylène.

**13.** Procédé selon l'une quelconque des revendications précédentes, dans lequel le matériau de départ d'acide alginique est sous la forme de fibres d'acide alginique.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20010100250

- US 20110028708 A

**Non-patent literature cited in the description**

- **H.K. HOLMEA ; K. LINDMOA ; A. KRISTIANSENA ; O. SMIDSRØD.** Thermal depolymerization of alginate in the solid state. *Carbohydr. Polym.,* 2003, vol. 54, 431-438
- **A. HAUG.** Dissociation of alginic acid. *Acta Chem. Scand.,* 1961, vol. 15, 950-952
- **A. HAUG ; B. LARSEN.** The solubility of alginate at low pH. *Acta Chem. Scand.,* 1963, vol. 17, 1653-1662
- **H.S. SOEDJAK.** Colorimetric determination of carrageenans and other anionic hydrocolloids with Methylene Blue. *Anal. Chem.,* 1994, vol. 66, 4514-4518
- **O. SMIDSRØD ; A. HAUG ; B. LARSEN.** Degradation of Alginate in the Presence of Reducing Compounds. *Acta Chem. Scand.,* 1963, vol. 17, 2628-2637

- **O. SMIDSRØD ; A. HAUG ; B. LARSEN.** The Influence of Reducing Substances on the Rate of Degradation of Alginates. *Acta Chem. Scand.,* 1963, vol. 17, 1473-1474
- **O. SMIDSRØD ; A. HAUG ; B. LARSEN.** Kinetic Studies on the Degradation of Alginic Acid in the Presence of Iron Salts. *Acta Chem. Scand.,* 1965, vol. 19, 143-152
- **H. GRASDALEN ; B. LARSEN ; O. SMIDSRØD.** *A Proton Magnetic Resonance Study of the Sequence of Uronate Residues in Alginate Carbohydr. Res.,* 1979, vol. 68, 23-31
- American Public Health Association for Food and Drug (APHA). 2001, vol. 22, 512